Europäisches Patentamt

(19) European Patent Office

Office européen des brevets

(11) Publication number: **0 016 753**
**B1**

(12) **EUROPEAN PATENT SPECIFICATION**

(45) Date of publication of patent specification: **25.05.83**

(21) Application number: **78900190.6**

(22) Date of filing: **03.07.78**

(86) International application number:
**PCT/SE78/00012**

(87) International publication number:
**WO 80/00191 07.02.80 Gazette 80/3**

(51) Int. Cl.³: **G 01 K 7/22, H 01 C 1/14, H 01 C 17/28**

(54) **A DEVICE FOR TEMPERATURE MEASUREMENT AND A METHOD FOR THE MANUFACTURE OF SUCH A DEVICE.**

(43) Date of publication of application:
**15.10.80 Bulletin 80/21**

(45) Publication of the grant of the patent:
**25.05.83 Bulletin 83/21**

(84) Designated Contracting States:
**CH DE FR GB LU SE**

(56) References cited:
**DE - A - 2 448 455**
**SE - A - 7 803 467**
**SE - A - 78 041 993**
**SE - C - 129 100**
**US - A - 3 646 494**

(73) Proprietor: **Crafon Medical AB**
**Box 10101**
**S-220 10 Lund (SE)**

(72) Inventor: **HAKANSSON, Bo Hakan**
**Astrakanvägen 6**
**S-223 56 Lund (SE)**
Inventor: **PERSSON, Per, Eskil, Lennart**
**Bredgatan 27**
**S-222 21 Lund (SE)**
Inventor: **WALL, Berth-Ove, Gunnar**
**Ryttmästarevägen 5**
**S-230 50 Bjärred (SE)**

(74) Representative: **Boberg, Nils Gunnar Erik**
**Gambro AB Patent Department Box 10101**
**S-220 10 Lund (SE)**

# A device for temperature measurement and a method for the manufacture of such a device

## Technical field

The present invention relates to a device for temperature measurement, comprising a temperature-sensitive sensor, whose electrical properties, e.g. the resistance, vary with the temperature, e.g. a thermistor, and which is connected via two contacts to two electric conductors forming part of a support, which electric conductors in turn can be connected to a reading unit for the reading of the actual values of an electric quantity corresponding to the temperature, the two electric conductors sandwiching an elongated strip forming the inner part of the support.

The invention also relates to a method for the manufacture of a device of the aforementioned type.

The device in accordance with the invention is mainly intended for use in medical temperature measurement.

It is desirable therefore to make it simple and cheap so that it can be discarded after application, that is to say, so that it does not have to be re-used.

To those versed in the art it will be clear, however, that the device in accordance with the invention can also be used in different circumstances, e.g. in purely industrial applications, where simple and inexpensive yet reliable reading of the temperature is required.

## Background art

The US patent 4 317 367 contains a description of different embodiments of a device similar to that according to the invention and how the device according to the invention can be applied. The idea behind the present invention is to produce such a device, but which is of simpler type and which can be made by a simpler method of manufacture.

In the two US patents 4 200 970 and 4 236 298 different trimming procedures for devices similar to that according to the invention are described. It should be possible to apply similar trimming procedures for the trimming of the device in accordance with the invention.

In the published German pat. appl. 24 48 455, finally, a method of manufacturing thermocouples is described. According to said method two different metal strips are attached to a support forming a thermocouple at one end thereof. A large support is then cut into strips each including a part of the thermocouple. A drawback of this method is that it is restricted to the use of thermocouples. According to the present invention thermistors may instead be used, providing the advantage that the temperature may be measured directly without the necessity to have a temperature difference for the measurement.

## Disclosure of invention

The device in accordance with the invention is characterized in that one conductor extends directly or via an extension over the edge at one end of the strip in the direction towards the other conductor, but without reaching as far as the same, thus forming a gap between the two conductors which is arranged so that it is bridged by the sensor, the contacts of which being connected to the said conductors.

The abovementioned construction makes possible a very simple method of manufacture which also constitutes an object of the present invention. This method is characterized in that a support, formed by a sheet of an electrically insulating material, e.g. plastics, coated with metal on both sides, is electrically short-circuited along one edge, that a gap is provided parallel with this edge in one coating, that the support is cut into strips transversely to the short-circuiting and to the said gap and that the sensor is brought to bridge said gap so that the contacts of the sensor are connected to the metal coatings providing the gap. The abovementioned strip can thus be made of an electrically insulating material, e.g. plastics, with the said conductors being arranged as thin metal coatings on opposite plane surfaces of the strip and the said gap can thus be provided transversely to the longitudinal direction of the strip in the form of a cut in one metal coating near one end of the strip.

The short circuiting of the sheet used as a starting material and provided with metal coatings on both sides can be achieved in various ways. It is brought about preferably in that a soldering material or some other similar electrically conducting material is made to surround the edge in contact with both the metal coatings. Alternatively, the one metal coating can be allowed to extend beyond the plastic material in the support and this coating can then be folded around the edge to make contact on the other side.

The sensor used should be provided on one side with two contacts for connection to each conductor. On the opposite side the sensor is appropriately provided with a third contact especially intended for trimming. This trimming may be carried out by means of shot peening, laser or some other mechanical or chemical treatment.

The abovementioned gap, slit or the like is appropriately produced by planing, scraping or some other kind of machining.

After the individual devices have been separated by cutting the starting material used into strips transversely to the short-circuiting and to the said gap, slit or the like, the striplike supports obtained can in turn be placed onto somewhat broader strips of a semi-rigid material, e.g. cardboard. The sensor and the connecting contacts are then placed appropriately so that they are located fully within the surface of the broader strip which carries the support. The end of the support remote from the sensor, on the other hand, is appropriately made to project beyond the end of the broader strip so as to facilitate the external connection to the contacts of the electric conductors.

In a preferred embodiment of the subject of the invention the somewhat broader strip consists of cardboard covered on both sides with plastic material, which after the fixing of the support is plastic coated in such a manner that the sensor, the connecting contacts and at least the nearest part of the electric conductors are covered by means of a plastic layer which in a tight manner enwraps these parts to the somewhat broader strip.

If the device in accordance with the invention is intended for medical usage, it is suitably sterilized and packed in a sterile manner before being delivered to the ultimate user.

Brief description of drawings

Fig. 1 shows a sensor intended for use in the manufacture of the device in accordance with the invention.

Fig. 2 shows a finished construction in accordance with the invention.

Fig. 3 finally shows a sheet prepared for the manufacture of devices in accordance with the invention.

Best mode for carrying out the invention

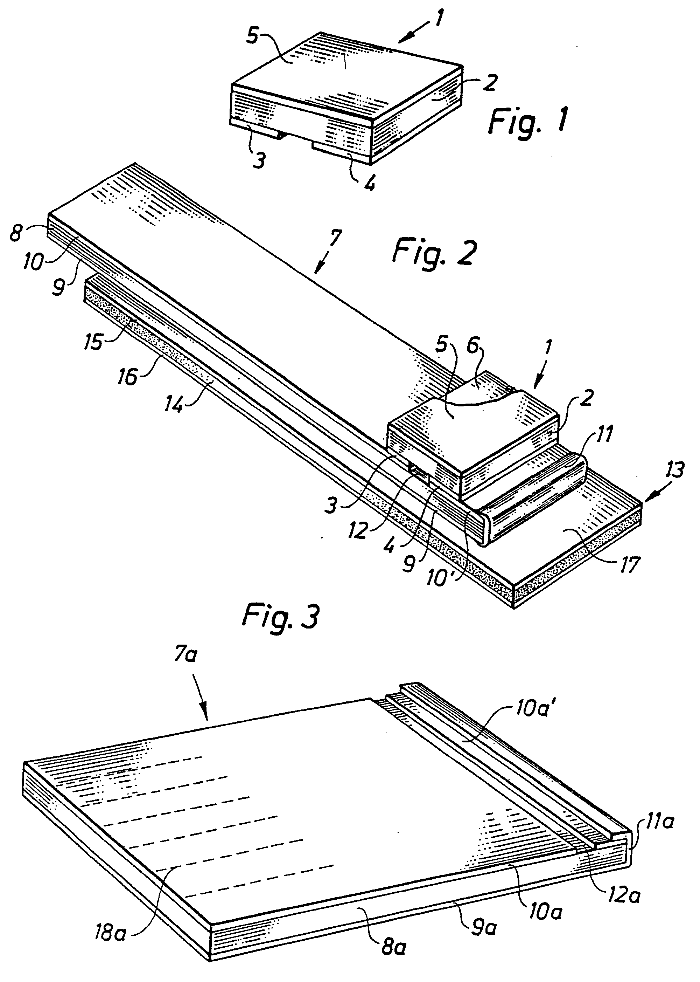

A preferred embodiment of the subject of the invention is shown in Fig. 2. It consists of a sensor 1, which in the example shown is constituted of a thermistor. This thermistor is made up of an inner ceramic material 2, whose electric resistance varies with the temperature. The thermistor is shown in untrimmed condition in Fig. 1. On its underside the thermistor is provided with two contacts 3 and 4 which, for example, may consist of a thin layer of silver. Similarly, the thermistor is provided on its upper side with a silver contact 5 intended for trimming. The trimming may take place by removing a small area 6 of the contact 5 by mechanical treatment, e.g. shot peening or by a laser beam. The thermistor is arranged on a support 7 which consists of an inner plastic material 8 with outer metal coatings 9 and 10. These metal coatings may, for example, consist of copper. At its front end, that is to say, the end provided with the sensor 1, the support 7 is short-circuited by a soldering 11 in such a manner that the metal coating 9 is in contact with a part 10' of the upper layer 10. This part 10' of the upper metal coating 10 is separated from the rest of this metal coating by a cut 12 which is meant electrically to isolate the two contacts 3 and 4 from one another.

The support 7 with the thermistor 1 described above is placed in turn on a somewhat broader strip 13. This strip 13 may consist of an inner cardboard material 14 with outer plastic coatings 15 and 16. The support 7 is placed so that the thermistor 1 is located fully within the surface 17 of the somewhat broader strip 13 carrying the support 7. The opposite end of the support, on the other hand, is arranged so that it projects beyond the somewhat broader strip 13. The idea behind this is that the part of the whole construction shown to the right in Fig. 2 should be capable of being dipped into an insulating plastic coating, so that the thermistor 1, connecting contacts 3, 4 and 5 and at least the nearest part of the electric conductors 9 and 10 are enwrapped in a tight manner to the corresponding end of the somewhat broader strip 13. This plastic wrapping can be made relatively thin by means of a transparent material and is therefore not shown in Fig. 2. The sterile package into which it is intended finally to pack the construction is also not shown.

In Fig. 3 finally a plastic sheet is shown which has been prepared for the manufacture of devices similar to that according to Fig. 2. This plastic sheet consists therefore of an inner plastic layer 8a with outer metal coatings 9a and 10a, the upper metal coating 10a being divided by a cut 12a to form a detached part 10a'. This detached part 10a' is short-circuited with the layer 9a in that the latter is folded around the edge of the sheetlike starting material. Thus the construction differs here from the construction shown in Fig. 2, where instead of the folded over part 11a a soldering 11 is applied. The broken lines 18a indicate how the sheet 7a is to be divided up before or after the placing of thermistors 1 in the manner as shown in detail in Fig. 2.

Alternatively, the part 10a' could be eliminated in the construction according to Fig. 3 in such a way that the gap 12a is formed directly between the coating 10a and the folded over part 11a. No such embodiment has been shown in the drawings, however, since it represents an alternative which is evident to those versed in the art.

Naturally, the invention is not limited merely to the embodiments described above, but, it can be varied within the scope of the following claims. Moreover, as mentioned earlier, its application is not limited merely to the medical field.

The reading of the measured values can take place in various ways, e.g. as described in the aforementioned patents. It is done preferably, however, with the help of tongs of the type as shown in the international patent application PCT/SE78/00013 (WO80/00192) submitted at the same time, reference to the relevant parts of which is made in this matter.

As an alternative to the thermistor 1 a thermo-couple may be used, the electro- motoric force of which varies with the temperature.

## Claims

1. A device for temperature measurement comprising a temperature-sensitive sensor (1), whose electrical properties, e.g. the resistance, vary with the temperature, e.g. a thermistor, and which is connected via two contacts (3, 4) to two electric conductors (9, 10) forming part of a support (7), which electric conductors in turn can be connected to a reading unit for the reading of the actual values of an electric quantity corresponding to the temperature, the two electric conductors (9, 10) sandwiching an elongated strip (8) forming the inner part of the support (7), characterized in that one conductor (9) extends directly or via an extension (11) over the edge at one end of the strip (8) in the direction towards the other conductor (10) but without reaching as far as the same thus forming a gap between the two conductors (9, 10) which is arranged so that it is bridged by the sensor (1) the contacts (3, 4) of which being connected to the said conductors (9, 10).

2. A device in accordance with claim 1, where the strip (8) is made of electrically insulating material, e.g. plastics, with the said conductors being arranged as metal coatings (9, 10) on the strip (8), characterized in that the said gap (12) is provided transversely to the longitudinal direction of the strip (8) in the form of a cut (12) in one metal coating (10) near one end of the strip (8).

3. A device in accordance with claim 1, where the strip (8a) is made of electrically insulating material, e.g. plastics, with the said conductors being arranged as metal coatings (9a, 10a) on the strip (8a), characterized in that one metal coating (10a) does not reach as far as the edge at one end of the strip (8a), whilst the other metal coating (9a) overlaps this edge and is folded around the same, the said gap (12a) being formed between the two coatings (9a and 10a) as they do not reach as far as each other.

4. A device in accordance with any one of the preceding claims, characterized in that the sensor (1) is provided with a third contact (5) for trimming on the side remote from the support.

5. A device in accordance with claim 1, characterized in that the support (7) is supported in turn by a somewhat broader strip (13) of a preferably semirigid material such as cardboard.

6. A device in accordance with claim 5, characterized in that the sensor and the connecting contacts (3, 4, 5) are located fully within the surface (17) of the broader strip (13) which carries the support (7).

7. A device in accordance with claim 5, characterized in that the end of the support (7) opposite the sensor (1) projects beyond the one end of the broader strip (13).

8. A device in accordance with claim 5, characterized in that the somewhat broader strip (13) consists of a cardboard coated on both sides with plastics.

9. A device in accordance with any one of claims 5—8, characterized in that the sensor (1), the connecting contacts (3, 4, 5) and at least the nearest part of the electric conductors (9, 10) are covered by means of a plastic layer which in a tight manner enwraps these parts to the somewhat broader strip (13).

10. A method for the manufacture of a device in accordance with any one of the preceding claims, characterized in that a support (7a), formed by a sheet (8a) of an electrically insulating material, e.g. plastics, coated with metal on both sides, is electrically short-circuited along one edge, that a gap (12a) is provided parallel with this edge in one coating, that the support (7a) is cut into strips (7) transversely to the short-circuit (11, 11a) and to the said gap (12, 12a) and that the sensor (1) is brought to bridge said gap so that the contacts (3, 4) of the sensor are connected to the metal coatings (9, 10; 9a, 10a) providing the gap (12).

11. A method in accordance with claim 10, characterized in that the short-circuit is brought about in that the two metal coatings (9, 10) are joined together via a soldering (11).

12. A method in accordance with claim 10, characterized in that the short-circuit (11a) is brought about in that the one metal coating (9a) is made to overlap one edge of the sheet and is folded around this edge to make contact with the other metal coating (10a).

13. A method in accordance with claim 10, characterized in that the said gap (12, 12a) is produced by planing or scraping.

## Revendications

1. Dispositif de mesure de température comprenant un détecteur (1) sensible à la température, dont les propriétés électriques, par exemple la résistance, varient avec la température, par exemple une thermistance, et qui est relié par l'intermédiaire de deux contacts (3, 4) à deux conducteurs électriques (9, 10) faisant partie d'un support (7), ces conducteurs électriques pouvant eux-mêmes être raccordés à un dispositif indicateur pour la lecture des valeurs effectives d'une grandeur électrique correspondant à la température, les deux conducteurs électriques (9, 10) étant situés de part et d'autre d'une bande allongée (8) constitue la partie intérieure du support (7), caractérisé en ce qu'un conducteur (9) s'étend, directement ou au moyen d'un prolongement (11), sur le bord d'une extrémité de la bande (8) en direction de l'autre conducteur (10) mais sans aller jusqu'à celui-ci, de façon à former un intervalle entre les deux conducteurs (9, 10) qui est prévu pour être chevauché par le détecteur (1) dont les contacts (3, 4) sont reliés auxdits conducteurs (9, 10).

2. Dispositif suivant la revendication 1, dans lequel la bande (8) est en matière électriquement isolante, par exemple en matière plastique, les conducteurs étant constitués par des revêtements métalliques (9, 10) sur la bande (8), caractérisé en ce que l'intervalle (12) est prévu transversalement à la direction longitudinale de la bande (8), sous la forme d'une entaille (12) dans un revêtement métallique (10), près d'une extrémité de la bande (8).

3. Dispositif suivant la revendication 1, dans lequel la bande (8a) est en matière électriquement isolante, par exemple en matière plastique, les conducteurs étant constitués par des revêtements métalliques (9a, 10a) sur la bande (8a), caractérisé en ce qu'un revêtement métallique (10a) n'arrive pas jusqu'au bord à une extrémité de la bande (8a) tandis que l'autre revêtement métallique (9a) déborde de ce bord et est rabattu autour de même bord, l'intervalle (12a) étant formé entre les deux revêtements (9a et 10a) qui n'atteignent pas l'un et l'autre le même point.

4. Dispositif suivant l'une quelconque des revendications précédentes, caractérisé en ce que le détecteur (1) comporte un troisième contact (5) pour calibrage, sur sa face éloignée du support.

5. Dispositif suivant la revendication 1, caractérisé en ce que le support (7) est luimême supporté par une bande un peu plus large (13), de préférence en matière semi-rigide telle que de carton.

6. Dispositif suivant la revendication 5, caractérisé en ce que le détecteur et les contacts de jonction (3, 4, 5) sont situés entièrement à l'intérieur de la surface (17) de la bande plus large (13) qui porte le support (7).

7. Dispositif suivant la revendication 5, caractérisé en ce que l'extrémité du support (7) opposée au détecteur (1) fait saille au-delà de l'extrémité correspondante de la bande plus large (13).

8. Dispositif suivant la revendication 5, caractérisé en ce que la bande un peu plus large (13) est constituée d'un carton revêtu sur ses deux faces de matière plastique.

9. Dispositif suivant l'une quelconque des revendications 5 à 8, caractérisé en ce que le détecteur (1), les contacts de jonction (3, 4, 5) et au moins la partie la plus proche des conducteurs électriques (9, 10) sont recouverts d'une couche de matière plastique qui enrobe étroitement ces parties ainsi que la bande un peu plus large (13).

10. Procédé de fabrication d'un dispositif suivant l'une quelconque des revendications précédentes, caractérisé en ce qu'un support (7a), formé par une feuille (8a) d'une matière électriquement isolante, par exemple une matière plastique, revêtue de métal sur ses deux faces, est électriquement court-circuité le long d'un bord, en ce qu'un intervalle (12a) est prévu dans un revêtement parallèlement à ce bord, en ce que le support (7a) est découpé en bandes (7) transversalement à la partie en court-circuit (11, 11a) et à l'intervalle (12, 12a) et en ce que le détecteur (1) est placé en chevauchement sur ledit intervalle, de façon que les contacts (3, 4) du détecteur soient en liaison avec les revêtements métalliques (9, 10; 9a, 10a) définissant l'intervalle (12).

11. Procédé suivant la revendication 10, caractérisé en ce que le court-circuit est crée par la jonction des deux revêtement métalliques (9, 10) au moyen d'une soudure (11).

12. Procédé suivant la revendication 10, caractérisé en ce que le court-circuit (11a) est obtenu par débordement d'un revêtement métallique (9a) sur un bord de la feuille et rabattement de ce revêtement autour de ce bord, pour venir en contact avec l'autre revêtement métallique (10a).

13. Procédé suivant la revendication 10, caractérisé en ce que l'intervalle (12, 12a) est formé par rabotage ou grattage.

**Patentansprüche**

1. Vorrichtung zum Temperaturmessen mit einem temperaturempfindlichen Sensor (1), dessen elektrische Eigenschaften, z.B. der Widerstand, mit der Temperatur variieren, z.B. ein Thermistor, und der über zwei Kontakte (3, 4) mit zwei elektrischen Leitern (9, 10), welche Teil eines Trägers (7) bilden, verbunden ist, wobei die elektrischen Leiter ihrerseits mit einer Ableseeinheit verbunden werden können zum Ablesen der tatsächlichen Werte einer der Temperatur entsprechenden elektrischen Größe, wobei die zwei elektrischen Leiter (9, 10) einen länglichen, den inneren Teil der Halterung oder des Trägers (7) bildenden Streifen (8) schichtenweise umfassen, dadurch gekennzeichnet, daß sich ein Leiter (9) direkt oder über eine Verlängerung (11) über die Kante an einem Ende des Streifens (8) in der Richtung zu dem anderen Leiter (10) hin erstreckt, ohne diesen aber soweit zu erreichen, wodurch ein Spalt zwischen den zwei Leitern (9, 10) gebildet wird, der so angeordnet ist, daß er von dem Sensor (1) überbrückt wird, dessen Kontakte (3, 4) mit den Leitern (9, 10) verbunden sind.

2. Vorrichtung nach Anspruch 1, wobei der Streifen (8) aus elektrisch isolierendem Material, z.B. Kunststoff, hergestellt ist, die Leiter als Metallauflagen (9, 10) auf dem Streifen (8) angeordnet sind, dadurch gekennzeichnet, daß der Spalt (12) quer zur Längsrichtung des Streifens (8) in der Form einer Kerbe oder eines Schnittes (12) in einer Metallauflage (10) nahe einem Ende des Streifens (8) vorgesehen ist.

3. Vorrichtung nach Anspruch 1, wobei der Streifen (8a) aus elektrisch isolierendem Material, z.B. Kunststoff, hergestellt ist, die Leiter als Metallauflagen (9a, 10a) auf dem Streifen (8a) angeordnet sind, dadurch gekennzeichnet, daß eine Metallauflage (10a) insoweit nicht die Kante an einem Ende des Streifens (8a) erreicht, während die andere Metallauflage (9a) diese Kante überlappt und um dieselbe umgefaltet ist, wobei der Spalt (12a) zwischen den zwei Auflagen (9a und 10a) gebildet wird, da sie einander so weit nicht erreichen.

4. Vorrichtung nach einem der vorhergehenden Ansprüche, dadurch gekennzeichnet, daß der Sensor (1) mit einem dritten Kontakt (5) für die Trimmung auf der Seite entfernt von der Halterung versehen ist.

5 Vorrichtung nach Anspruch 1, dadurch gekennzeichnet, daß die Halterung (7) ihrerseits von einem etwas breiteren Streifen (13) aus vorzugsweise halbstarrem Material gestützt ist, wie z.B. Karton.

6. Vorrichtung nach Anspruch 5, dadurch gekennzeichnet, daß der Sensor und die Verbindungskontakte (3, 4, 5) vollständig innerhalb Oberfläche (17) des breiteren Streifens (13) angeordnet sind, welcher die Halterung (7) trägt.

7. Vorrichtung nach Anspruch 5, dadurch gekennzeichnet, daß das Ende der Halterung (7) gegenüber dem Sensor (1) über das eine Ende des breiteren Streifens (13) hinausragt.

8. Vorrichtung nach Anspruch 5, dadurch gekennzeichnet, daß der etwas breitere Streifen (13) aus einem auf beiden Seiten mit Kunststoff beschichteten Karton besteht.

9. Vorrichtung nach einem der Ansprüche 5—8, dadurch gekennzeichnet, daß der Sensor (1), die Verbindungskontakte (3, 4, 5) und mindestens der nächstliegende Teil der elektrischen Leiter (9, 10) mittels einer Kunststoffschicht abgedeckt sind, die in abdichtender Weise diese Teile zu dem etwas breiteren Streifen (13) umwickelt.

10. Verfahren zur Herstellung einer Vorrichtung gemäß einem der vorhergehenden Ansprüche, dadurch gekennzeichnet, daß eine Halterung (7a), die durch einen Bogen (8a) aus elektrisch isolierendem Material, z.B. Kunststoff, der auf beiden Seiten mit Metall beschichtet ist, gebildet wird, elektrisch entlang einer Kante kurzgeschlossen wird, daß ein Spalt (12a) parallel zu dieser Kante in einer Beschichtung bzw. Auflage vorgesehen wird, daß die Halterung (7a) quer zu dem Kurzschluß (11, 11a) und zu dem Spalt (12, 12a) in Streifen (7) geschnitten wird und daß der Sensor (1) dazu gebracht wird, den Spalt so zu überbrücken, daß die Kontakte (3, 4) des Sensors mit den Metallauflagen (9, 10; 9a, 10a) unter Schaffung des Spaltes (12) verbunden sind.

11. Verfahren nach Anspruch 10, dadurch gekennzeichnet, daß das Kurzschließen dadurch erfolgt, daß zwei Metallauflagen (9, 10) über eine Lötung (11) miteinander verbunden werden.

12. Verfahren nach Anspruch 10, dadurch gekennzeichnet, daß das Kurzschließen (11a) dadurch erfolgt, daß eine Metallauflage (9a) dazu gebracht wird, eine Kante des Bogens zu überlappen, und um diese Kante herumgefaltet wird, um mit der anderen Metallauflage (10a) Berührung herzustellen.

13. Verfahren nach Anspruch 10, dadurch gekennzeichnet, daß der Spalt (12, 12a) durch Hobeln oder Kratzen erzeugt wird.

0016753

Fig. 1

Fig. 2

Fig. 3